# EUROPEAN PATENT SPECIFICATION

(11) **EP 0 984 499 B1**
(45) Date of publication and mention of the grant of the patent: **12.03.2003**
(21) Application number: 99117208.1
(22) Date of filing: 01.09.1999
(51) Int. Cl.: H01M 2/30, H01M 10/40

(54) **Lithium secondary cell**
Lithium-Sekundärbatterie
Pile secondaire au lithium

(30) Priority: 02.09.1998 JP 24845498
(43) Date of publication of application: 08.03.2000
(60) Divisional application: 01128771.1
(73) Proprietor: SANYO ELECTRIC Co., Ltd., Moriguchi-shi, Osaka 570 (JP)
(72) Inventor: Nakanishi, Naoya, Moriguchi-shi, Osaka (JP); Satoh, Kouichi, Moriguchi-shi, Osaka (JP); Fujiwara, Kazuyasu, Moriguchi-shi, Osaka (JP); Nohma, Toshiyuki, Moriguchi-shi, Osaka (JP); Yonezu, Ikuo, Moriguchi-shi, Osaka (JP)
(74) Representative: Glawe, Delfs, Moll & Partner

(56) References cited:
- EP-A- 0 674 351
- EP-A- 0 851 514
- EP-A- 0 910 129
- FR-A- 2 641 418
- US-A- 5 773 164
- DATABASE WPI Section Ch, Week 197806 Derwent Publications Ltd., London, GB; Class A85, AN 1978-11011A XP002122433 & JP 52 154035 A (YUASA BATTERY CO LTD), 21 December 1977 (1977-12-21)
- PATENT ABSTRACTS OF JAPAN vol. 018, no. 641 (E-1639), 6 December 1994 (1994-12-06) & JP 06 251761 A (JAPAN STORAGE BATTERY CO LTD), 9 September 1994 (1994-09-09)
- PATENT ABSTRACTS OF JAPAN vol. 017, no. 409 (C-1091), 30 July 1993 (1993-07-30) & JP 05 078889 A (KOBE STEEL LTD), 30 March 1993 (1993-03-30)

## Description

### FIELD OF THE INVENTION

The present invention relates to lithium secondary cells, i.e., to improvements in lithium secondary cells wherein the negative electrode is made chiefly from metallic lithium, lithium alloy and/or a carbon material or oxide material capable of absorbing and desorbing lithium, and the positive electrode is prepared mainly from a positive electrode material typical of which is a metallic oxide. More particularly the invention relates to improvements in the positive electrode terminal and the negative electrode terminal for delivering current from an electrode unit serving as the electricity generating element to an external circuit.

### BACKGROUND OF THE INVENTION

The negative electrode materials heretofore proposed for use in lithium secondary cells include graphite, coke and like carbon materials, metallic lithium, lithium alloys and tin oxides. Among these, carbon materials are already in use for negative electrodes to provide lithium secondary cells. Graphite is one of the materials which are generally used for negative electrodes because graphite exhibits a discharge potential in close proximity to the potential of metallic lithium to afford lithium secondary cells of high energy density.

For example, JP-A No. 92335/1997 discloses one of lithium secondary cells wherein such materials are used for the negative electrode. The proposed cell has a negative electrode prepared from a carbon material and a negative electrode output terminal made from pure copper. Pure copper remains stable at the negative electrode potential during the charging and discharging of the lithium secondary cell and is therefore used for the negative electrode output terminal. Besides pure copper, titanium, nickel, stainless steel, etc. appear useful as potentially stable materials, whereas pure copper is thought suitable in view of ease of working.

However, pure copper is susceptible to oxidation and liable to form an oxide film at the portion of the cell exposed to the atmosphere, so that when used for the negative electrode terminal, pure copper has the problem of giving increased contact resistance at the connection to an external circuit, causing faulty contact to result in a discharge voltage drop.

On the other hand, pure aluminum is used for the positive electrode terminal of such a lithium secondary cell (see, for example, JP-A No. 92335/1997) since pure aluminum is also stable at the positive electrode potential during the charging and discharging of the cell. Although titanium, stainless steel, etc. appear useful as potentially stable materials besides pure aluminum, pure aluminum is considered to be suitable from the viewpoint of easy of working, conductivity and material cost.

Pure aluminum is nevertheless prone to form an oxide film, so that when used for the positive electrode terminal, this metal has the problem of offering greater contact resistance at the connection to an external circuit, giving rise to faulty contact or causing a discharge voltage drop as in the case of the negative electrode terminal.

Moreover, the positive or negative electrode terminal is not always satisfactory in mechanical strength and is not always suitable to tighten up with sufficiently great torque when a lead is to be attached thereto for connection to an external power source. This entails the problem that the terminal mount portion will not be sealed off effectively.

JP 52-154035A discloses a battery comprising anode active material of light metal, cathode active material of silver tungstate or copper tungstate and a non aquious organic electrolyte. The cathode can consist of an Al-Mg-Si alloy.

EP-A-0 674 351 discloses a battery connected to a charge-discharge lead with a pressure sensing device which deforms in response to the increase of the pressure.

### SUMMARY OF THE INVENTION

An object of the present invention, which is to overcome these problems, is to propose improved positive electrode terminal and negative electrode terminal, and an improved electrode terminal for a positive or negative electrode, for use in delivering the electric energy produced by an electricity generating element to an external device, and to further provide a lithium secondary cell having the positive electrode terminal and/or the negative electrode terminal.

Another object of the invention is to use the positive electrode terminal and/or the negative electrode terminal to assure the terminal or terminals of an enhanced mechanical strength in fabricating the cell and thereby improve the reliability of electrical connection of the cell to an external circuit and give an improved sealing effect to the terminal mount portion or portions. The formation of oxide film on the surfaces of the positive and negative electrode terminals is inhibited, enabling the terminals to retain high conductivity to suppress the discharge voltage drop of the cell.

These objects are fulfilled by the features of claims 1, 7 or 11.

Advantageous embodiments are mentioned in the subclaims.

### BRIEF DESCRIPTION OF THE DRAWINGS

FIG. 1 is a perspective view showing the appearance of a cylindrical lithium secondary cell as a first embodiment of the invention;
FIG. 2 is an exploded perspective view of the lithium secondary cell;
FIG. 3 is a fragmentary view in section of the lithium secondary cell;

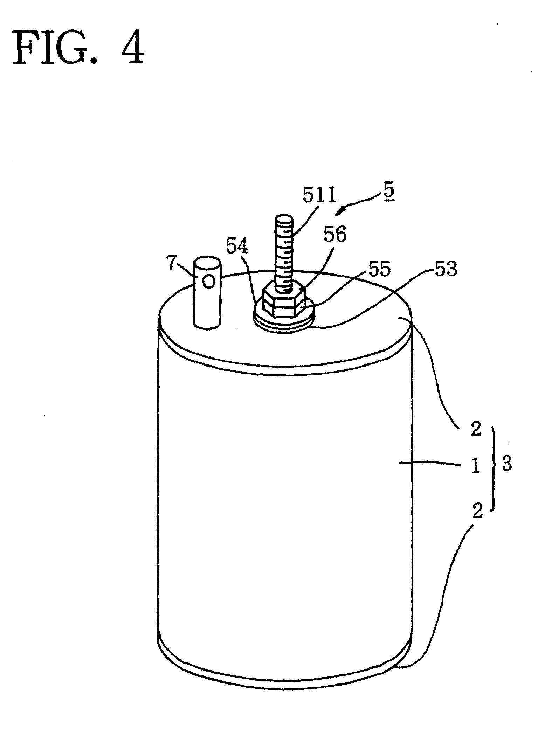

FIG. 4 is a perspective view showing the appearance of another cylindrical lithium secondary cell as a second embodiment of the invention; and
FIG. 5 is a graph showing the relationship between the aluminum content and the incidence of leak.

### DETAILED DESCRIPTION OF EMBODIMENTS

The present invention will be described in greater detail with reference to the following embodiments, whereas the invention is in no way limited to these embodiments and can be practiced as suitably modified within the scope of the essential feature thereof.

### Embodiment 1

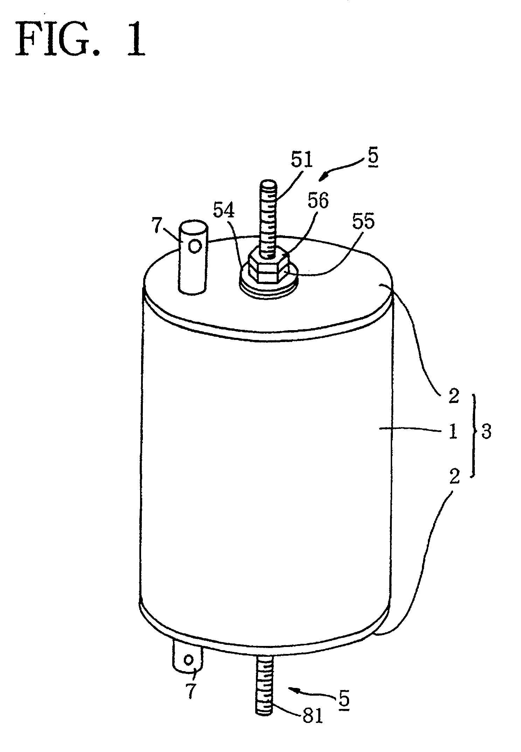

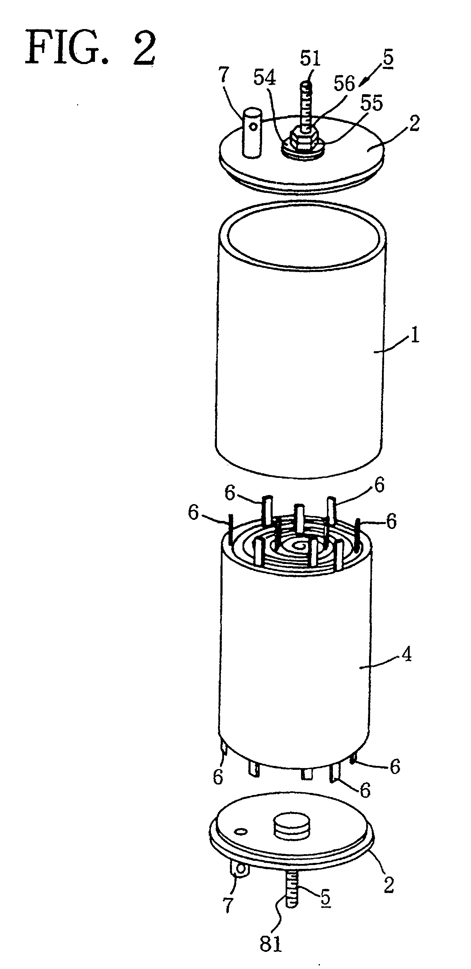

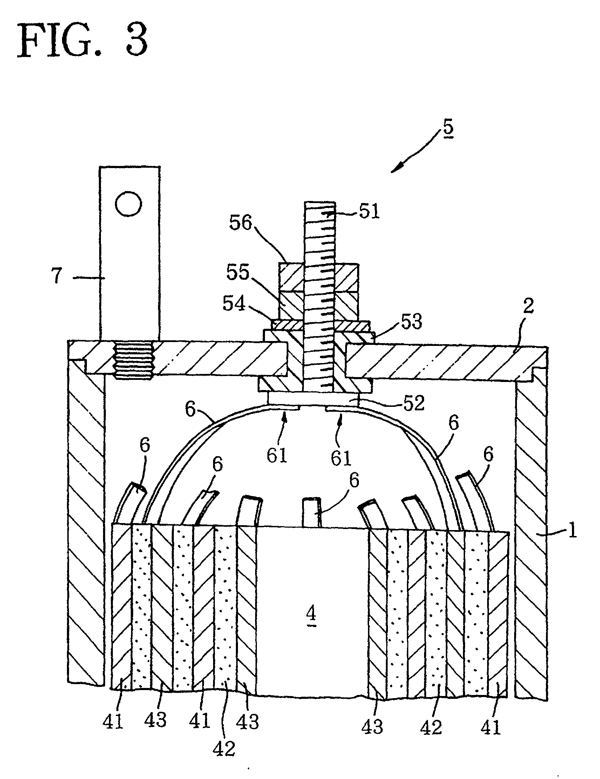

Embodiment 1 will be described which is a cylindrical lithium secondary cell having a relatively large capacity and equipped with a positive electrode terminal and a negative electrode terminal. FIG. 1 is an overall perspective view of the cell of the invention, FIG. 2 is an exploded perspective view of the cell, and FIG. 3 is a view partly in section of the cell.

As shown in FIGS. 1 and 2, the cell of the invention comprises a cylindrical battery can 3 having an aluminum cylinder 1 and lids 2, 2 welded to the respective ends thereof, and a rolled-up electrode unit 4 encased in the can 3. A pair of positive and negative electrode terminal assemblies 5, 5 are attached respectively to the lids 2, 2 which are made of aluminum. The rolled-up electrode unit 4 is connected to the terminal assemblies 5, 5 by a plurality of electrode tabs 6, whereby the electric power generated by the electrode unit 4 can be delivered to an external device from the pair of terminal assemblies 5, 5. Each lid 2 is provided with a gas vent plug 7.

With reference to FIG. 3, the rolled-up electrode unit 4 comprises a positive electrode 41 containing a lithium composite oxide, a separator 42 impregnated with a nonaqueous electrolyte, and a negative electrode 43 containing a carbon material which are lapped over one another and rolled up into a cylinder. A plurality of electrode tabs 6 outwardly extend from each of the positive electrode 41 and the negative electrode 43, and the outer ends 61 of the electrode tabs 6 of the same polarity are joined to one electrode terminal assembly 5. For convenience' sake, only some of these tabs 6 are shown as being joined at their outer ends to the terminal assembly 5 in FIG. 3, while the connection of the ends of the other tabs to the assembly 5 is omitted from the illustration.

The positive electrode terminal assembly 5 has a positive electrode terminal 51 comprising a screw member which extends through a hole in the lid 2 of the battery can 3 and is attached to the lid. The terminal 51 has a flange 52 at its base end. An insulating member 53 of polypropylene is fitted in the hole of the lid 2 to provide electrical insulation and serve as a seal. The positive electrode terminal 51 has a washer 54 fitted therearound from outside the battery can 3, and a first nut 55 and a second nut 56 screwed thereon similarly. The first nut 55 is tightened up to clamp the insulating member 53 between the flange 52 of the terminal 51 and the washer 54 and thereby seal off the hole more effectively. The second nut 56 is utilized for connection to an external circuit.

The electrode tabs 6 extending from the positive electrode of the rolled-up electrode unit 4 are prepared from aluminum foil having a thickness of about 0.1 mm. The outer ends 61 of the tabs 6 are secured to the flange 52 of the terminal 51 by spot welding. Alternatively, the tab ends 61 can be secured by ultrasonic welding.

The negative electrode terminal assembly 5 also has the same construction as described above and comprises a negative electrode terminal 81, which extends through, and is attached to, the lid 2 of the battery can 3. The electrode tabs 6 extending from the negative electrode of the rolled-up electrode unit 4 are prepared frcm nickel foil having a thickness of about 0.1 mm. The outer ends 61 of the tabs 6 are secured to the flange of the negative electrode terminal 81 by spot welding.

With the lithium secondary cell of the present invention, the positive electrode terminal 51 is made from an aluminum alloy. The aluminum alloy is, for example, an Al-Mg-Si alloy comprising aluminum (Al), magnesium (Mg) and silicon (Si). Typical of such alloys is A6101 prescribed in Japanese Industrial Standards (JIS).

The aluminum alloy, A6101 according to JIS, has a composition comprising 0.35 to 0.8 wt. % of Mg, 0.30 to 0.7 wt. % of Si, 0.50 wt. % of Fe, 0.10 wt. % of Cu, 0.03 wt.% of Mn, 0.10 wt. % of Zn, 0.03 wt. % of Cr, 0.06 wt. % of B and the balance Al.

On the other hand, the negative electrode terminal 81 is made from a material prepared by plating a substrate of copper with nickel. Most suitably, the copper is oxygen-free copper.

The cylindrical lithium secondary cell is fabricated by attaching an electrode terminal assembly 5 to each of lids 2 for forming an battery can 3, welding the outer ends 61 of electrode tabs 6 extending from the positive electrode and the negative electrode of a rolled-up electrode unit 4 to the respective flanges 52 of a positive electrode terminal 51 and a negative electrode terminal 81 in corresponding relation, with the electrode unit 4 placed in a cylinder 1, and finally securing the lids 2 to the cylinder 1 by welding, with the respective open ends of the cylinder fitted with the lids.

### Embodiment 2

Embodiment 2 will be described wherein an battery can serves also as a positive electrode terminal for delivering electricity to an external circuit.

This embodiment differs from Embodiment 1 described in the following feature. An electrode terminal 511 serving as the negative electrode terminal is attached to one lid 2 for forming an battery can 3 with an insulating member 53 provided between the lid and the terminal. A plurality of electrode tabs extending from the positive electrode of a rolled-up electrode unit 4 are joined directly to the inner surface of the battery can 3, while a plurality of electrode tabs extending from the negative electrode of the unit 4 are connected to the electrode terminal 511. Embodiment 2 is the same as Embodiment 1 with respect to the other components such as a gas vent plug 7.

The electrode terminal 511 is made from a material prepared by plating a substrate of copper with nickel. Most suitably, the copper is oxygen-free copper.

In the case where a cell is to be fabricated according to Embodiment 2 with the positive electrode and the negative electrode replaced by each other, the electrode terminal 511 serving the function of the positive terminal is made from an aluminum alloy. The aluminum alloy is, for example, an Al-Mg-Si alloy comprising aluminum (Al), magnesium (Mg) and silicon (Si). Typical of such alloys is A6101 prescribed in Japanese Industrial Standards (JIS). Instead of aluminum, stainless steel or the like is used as the material for the battery can 3.

### Experiment 1

In this experiment, lithium secondary cells having the construction of Embodiment 1 described were tested for comparison between two cases, i.e., use of pure aluminum for making the positive electrode terminal 51, and use of the aluminum alloy, A6101 according to JIS, for the terminal 51.

Prepared for the experiment were comparative cells each having a positive electrode terminal 51 in the form of a pure aluminum bolt of M8 (diameter, 8 mm) and pure aluminum nuts 55, 56, and cells of the invention each having a positive electrode terminal 51 in the form of an aluminum alloy bolt and aluminum alloy nuts 55, 56. The cells were then checked for sealing effect and changes in appearance after tightening up the first nut 55 with varying torques. The sealing effect was evaluated immediately after the completion of tightening or after subjecting the cell to 100 heat cycles of -20°C-80°C, by filling the cell with nitrogen gas to a pressure of 5 kgf/cm² and visually checking the cell for a leak of nitrogen gas using an aqueous solution of soap.

Table 1 shows the results.

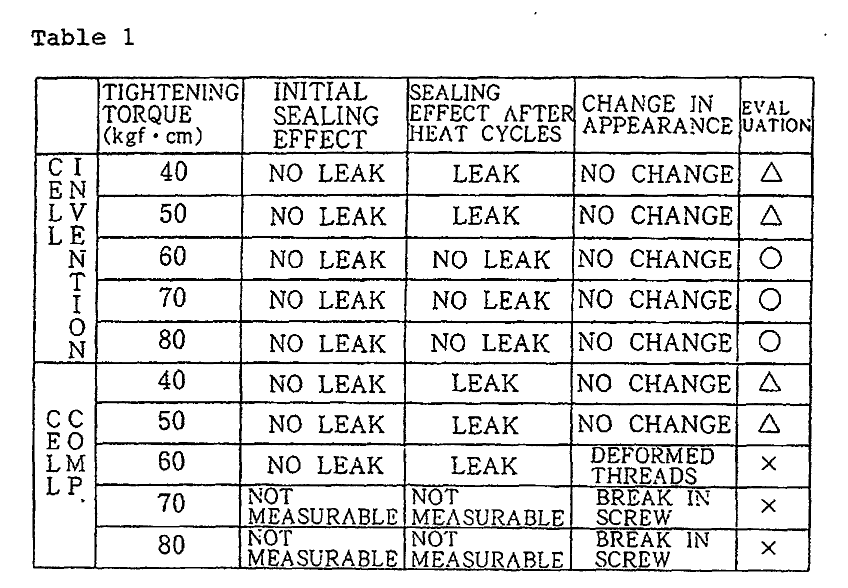

The results indicate that when the tightening torque was not greater than 50 kgf · cm, both the cell of the invention and the comparative cell failed to exhibit a sealing effect after the heat cycles owing to insufficient tightening torque. The failure is irrelevant to the terminal material and attributable to the sealing structure. When the tightening torque was 60 kgf · cm, the cell of the invention was free of deformation and satisfactory in sealing effect, whereas a sealing failure occurred in the comparative cell due to deformed threads leading to insufficient tightening. When the tightening torque was not smaller than 70 kgf · cm, the screw broke in the comparative cell, failing to serve the intended function, whereas the cell of the invention retained a satisfactory sealing effect. These findings reveal that the aluminum alloy A6101 prescribed in JIS is advantageous to use as the material for the positive electrode terminal.

### Experiment 2

In this experiment, lithium secondary cells having the construction of Embodiment 1 described were tested for comparison using pure nickel, pure copper or oxygen-free copper plated with nickel for making the negative electrode terminal 81.

Prepared for the experiment were Comparative Cell 1 having a negative electrode terminal 81 in the form of a pure nickel bolt of M8 and pure nickel nuts 55, 56, Comparative Cell 2 having a negative electrode terminal 81 in the form of a pure copper bolt and pure copper nuts 55, 56, and cells of the invention each having a negative electrode terminal 81 in the form of a bolt made of oxygen-free copper and plated with nickel and nuts 55, 56 made of oxygen-free copper and plated with nickel. The term "oxygen-free copper" refers to copper which has a high purity, contains no oxygen and is prepared by reduction in a reducing gas or melting in a vacuum for use as a material for vacuum tubes, etc.

First, Comparative Cell 1 and one of the cells of the invention were checked for sealing effect and changes in appearance after tightening up the first nut 55 with a torque of 70 kgf · cm. The cells were tested for sealing effect by filling the cell with nitrogen gas to a pressure of 5 kgf/cm² and visually checking the cell for a leak of nitrogen gas using an aqueous solution of soap.

Table 2 shows the results.

**Table 2**

| | MATERIAL OF NEGATIVE ELECTRODE TERMINAL | INCIDENCE OF LEAK | APPEARANCE |
|---|---|---|---|
| INVENTION CELL | OXYGEN - FREE Cu + Ni PLATING | 0 / 100 | TIGHTEN UP WITH NO FAULTS HARD |
| COMP. CELL 1 | PURE Ni | 32/100 | MATERIAL, SCREW DISTORTION |

The results reveal the superiority of the cell of the invention wherein the bolt providing the negative electrode terminal 81 and the nuts 55, 56 were made of oxygen-free copper and plated with nickel, over Comparative Cell 1 wherein the bolt of pure nickel and the nuts 55, 56 of pure nickel were used, hence the advantage of the material of the invention for the negative electrode terminal. Incidentally, the nickel plating layer is about 100 µm in thickness.

Next, Comparative Cell 2 and the cell of the invention were checked for the electric conductivity of the negative electrode terminal after tightening up the first nut 55 with a torque of 70 kgf · cm. The lithium secondary cells used for the evaluation of the conductivity were of 50 Wh class and 40 mm in diameter and 190 mm in height. Each cell was discharged at a definite current value for a specified period of time, and the voltage drop was measured from the open-circuit voltage to calculate the cell resistance from the measurement. Stated more specifically, the positive terminal and the negative terminal of an external measuring instrument were connected to the positive electrode terminal and the negative electrode terminal, each as clamped between the two nuts 55, 56, and the voltage drop was measured with the IR drop of the positive and negative electrode terminals involved. The measurement was made twice, i.e., immediately after the fabrication of the cell and after preservation at 60°C for 20 days. The cell was discharged at a current value of 10 A, 30 A, 60 A and 90 A, for 10 seconds at each value, and the resulting voltage drop was measured each time. The cell resistance was calculated form the measurements obtained.

Table 3 shows the results.

**Table 3**

| | NEGATIVE ELECTRODE TERMINAL | CELL RESISTANCE IMMEDIATELY AFTER FABRICATION | CELL RESISTANCE AFTER PRESERVATION AT 60°C FOR 20 DAYS |
|---|---|---|---|
| INVENTION CELL | OXYGEN - FREE Cu + Ni PLATING | 5.23∼5.47m Ω | 5.42∼5.73m Ω |
| COMP. CELL 2 | PURE Ni | 5.30∼5.51m Ω | 6.23∼7.34m Ω |

The results reveal the superiority of the cell of the invention wherein the bolt providing the negative electrode terminal 81 and the nuts 55, 56 were made of oxygen-free copper and plated with nickel, over Comparative Cell 2 wherein the bolt of pure copper and the nuts 55, 56 of pure copper were used, hence the advantage of the material of the invention for the negative electrode terminal. The reason is that with Comparative Cell 2, an oxide film is formed on the surface of the negative electrode terminal, giving increased contact resistance to the connection to the external circuit.

Further studies were made on the composition of aluminum alloys for forming the positive electrode terminal 51 for use in the cylindrical lithium secondary cell according to Embodiment 1 shown in FIGS. 1 to 3. The negative electrode terminal 81 was prepared from a substrate of copper plated with nickel.

### Invention Cells 1-8

Positive electrode terminals 51 each comprising a bolt of M8, and nuts 55, 56 were prepared from eight kinds of aluminum alloys different in composition and containing Si, Mg, Fe or Cu as an additive element as listed in Tables 4 to 7, and Invention Cells 1 to 8 were fabricated.

The cells were then checked for sealing effect after tightening up the first nut 55 with a torque of 70 kgf · cm. The sealing effect was evaluated after subjecting the cell to 100 heat cycles of -20°C - 80°C, by filling the cell with nitrogen gas to a pressure of 5 kgf/cm² and visually checking the cell for a leak of nitrogen gas using an aqueous solution of soap.

The cells were also checked for electric conductivity by discharging the cell at a definite current value for a specified period of time, measuring the voltage drop from the open-circuit voltage and calculating the cell resistance from the measurement.

**Table 4**

| | Al (wt%) | Si (wt%) |
|---|---|---|
| INVENTION CELL 1 | 99.00 | 1.00 |
| INVENTION CELL 2 | 98.50 | 1.50 |

**Table 5**

| | Al (wt%) | Mg (wt%) |
|---|---|---|
| INVENTION CELL 3 | 99.00 | 1.00 |
| INVENTION CELL 4 | 98.50 | 1.50 |

**Table 6**

| | Al (wt%) | Fe (wt%) |
|---|---|---|
| INVENTION CELL 5 | 99.00 | 1.00 |
| INVENTION CELL 6 | 98.50 | 1.50 |

**Table 7**

| | Al (wt%) | Cu (wt%) |
|---|---|---|
| INVENTION CELL 7 | 99.00 | 1.00 |
| INVENTION CELL 8 | 98.50 | 1.50 |

### Invention Cells 9-12

Positive electrode terminals each comprising a bolt of M8, and nuts were prepared from four kinds of aluminum alloys different in the ratio of components and containing Mg, Si, Fe, Cu, Mn, Cr, Zn and B as additive elements as listed in Table 8, and Invention Cells 9 to 12 were fabricated.

### Invention Cells 13-19

Positive electrode terminals each comprising a bolt of M8, and nuts were prepared from seven kinds of aluminum alloys different in the ratio of components and containing Mg, Si, Fe, Cu, Mn, Cr, Zn and B as additive elements as listed in Table 9, and Invention Cells 13 to 19 were fabricated.

### Invention Cells 20-26

Positive electrode terminals each comprising a bolt of M8, and nuts were prepared from seven kinds of aluminum alloys different in the ratio of components and containing Mg, Si, Fe, Cu, Mn, Cr, Zn and B as additive elements as listed in Table 10, and Invention Cells 20 to 26 were fabricated.

### Invention Cells 27, 28

Positive electrode terminals each comprising a bolt of M8, and nuts were prepared from two kinds of aluminum alloys different in the ratio of components and containing Mg, Si, Fe, Cu, Mn, Cr, Zn and B as additive elements as listed in Table 11, and Invention Cells 27 and 28 were fabricated.

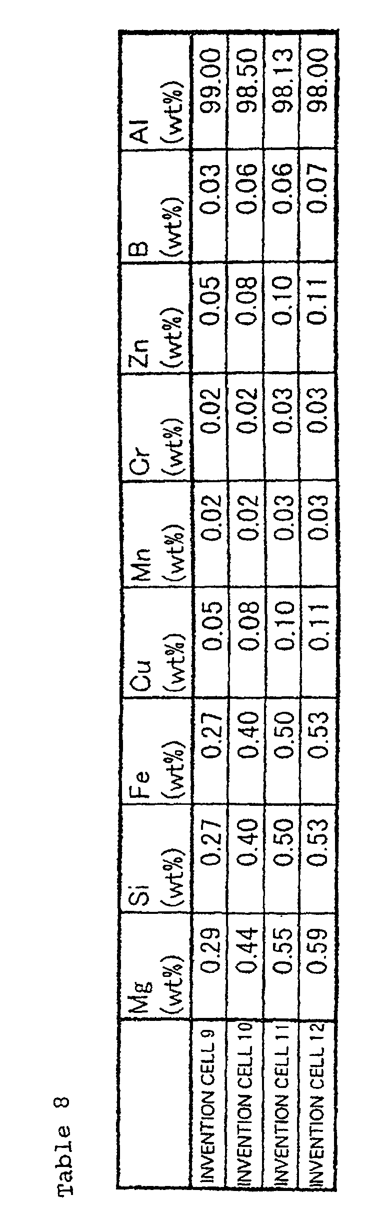

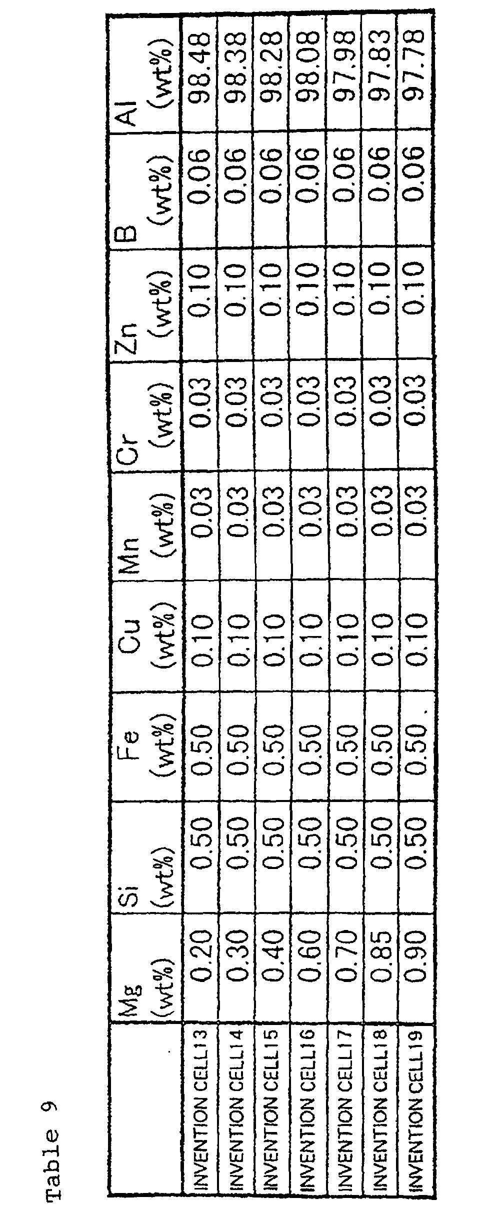

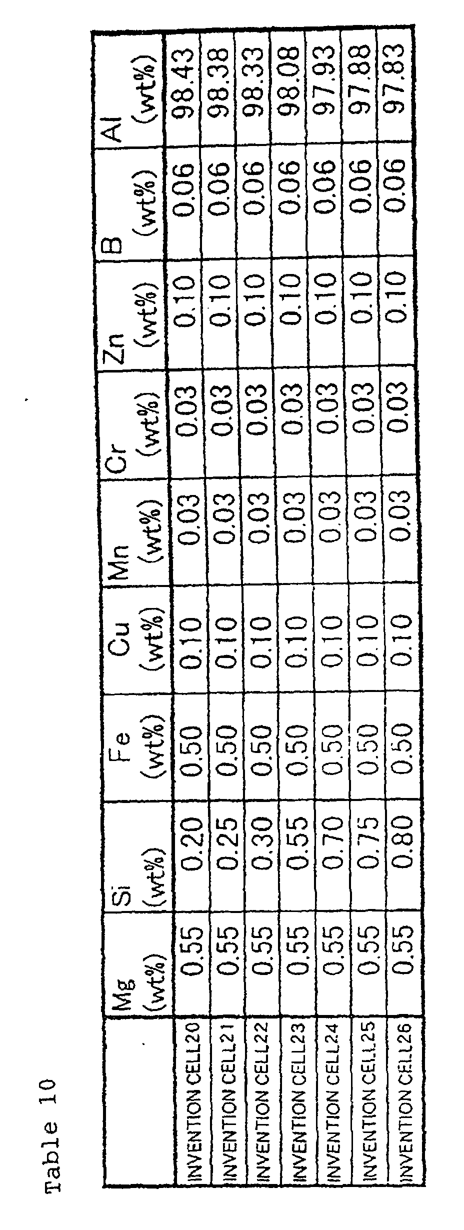

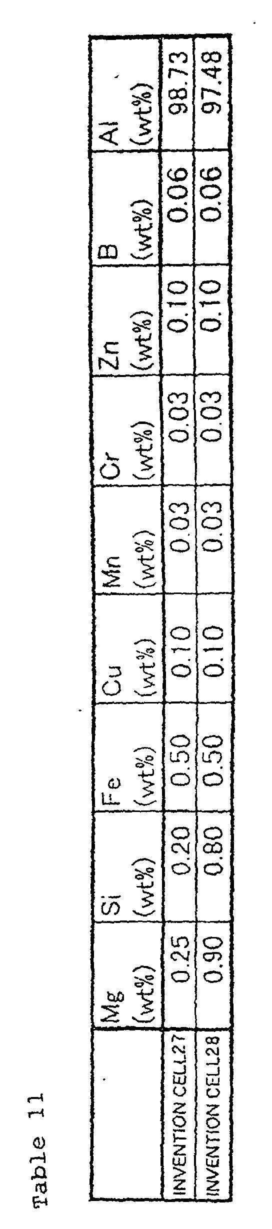

### Comparative Cells 3-10

Positive electrode terminals each comprising a bolt of M8, and nuts were prepared from eight kinds of aluminum alloys different in composition and containing Si, Mg, Fe or Cu as an additive element as listed in Tables 12 to 15, and Comparative Cells 3 to 10 were fabricated.

### Comparative Cells 11, 12

Positive electrode terminals each comprising a bolt of M8, and nuts were prepared from two kinds of aluminum alloys containing Mg, Si, Fe, Cu, Mn, Cr, Zn and B as additive elements as listed in Table 16, and Invention Cells 11 and 12 were fabricated.

**Table 12**

| | Al (wt%) | Si (wt%) |
|---|---|---|
| COMP. CELL 3 | 99.50 | 0.50 |
| COMP. CELL 4 | 99.10 | 0.90 |

**Table 13**

| | Al (wt%) | Mg (wt%) |
|---|---|---|
| COMP. CELL 5 | 99.50 | 0.50 |
| COMP. CELL 6 | 99.10 | 0.90 |

**Table 14**

| | Al (wt%) | Fe (wt%) |
|---|---|---|
| COMP. CELL 7 | 99.50 | 0.50 |
| COMP. CELL 8 | 99.10 | 0.90 |

**Table 15**

| | Al (wt%) | Cu (wt%) |
|---|---|---|
| COMP. CELL 9 | 99.50 | 0.50 |
| COMP. CELL 10 | 99.10 | 0.90 |

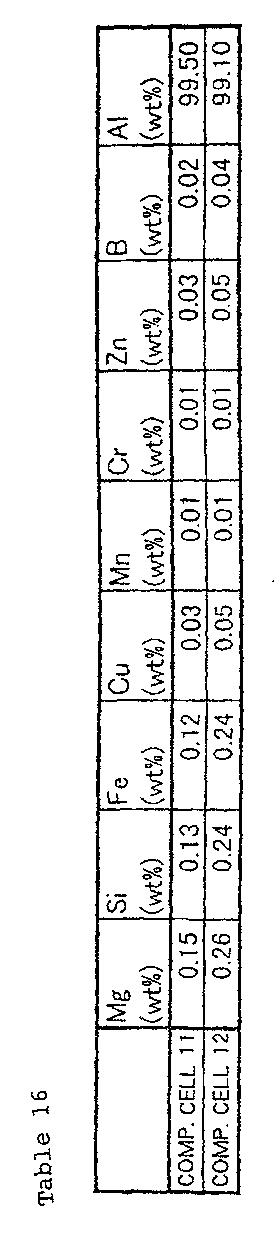

### Evaluation

Tables 17 to 24 show the incidences of leak in the cells and cell resistances.

Tables 17 to 20 show that the incidence of leak can be reduced by preparing the positive electrode terminal from an aluminum alloy containing any one of the additive elements Si, Mg, Fe and Cu in an amount of at least 1.0 wt. %. This is attributable to an increased alloy strength due to the presence of the different metal and resulting in suppressed deformation of the positive electrode terminal at the tightening torque of 70 kgf · cm.

Table 21 reveals that the use of the aluminum alloy containing Mg, Si, Fe, Cu, Mn, Cr, Zn and B as additive elements in a combined amount of at least 1.0 wt. % results in reduced cell resistance, increased power density and decreased incidence of leak.

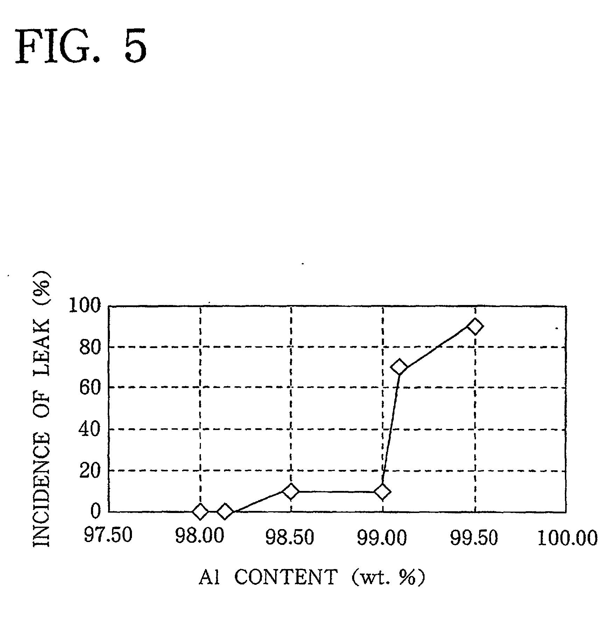

FIG. 5 is a graph showing the relationship between the aluminum content and the incidence of leak established for Comparative Cells 11 and 12 and Invention Cells 9 to 12. The graph reveals that the incidence of leak decreases markedly when the aluminum content is lower than 99 wt. % which is a boundary value. Accordingly the combined content of additive elements other than aluminum which should be at least 1.0 wt. % has a critical significance.

Tables 22 and 24 further indicate that when the Mg content of aluminum alloys is in the range of at least 0.30 wt. % to not higher than 0.85 wt. %, reduced cell resistance is available to give an increased power density.

This result substantiates the superiority of the Mg content of aluminum alloys which should be in the range of at least 0.30 wt. % to not higher than 0.85 wt. %.

Tables 23 and 24 further show that reduced cell resistance is available to afford an increased power density when the Si content of aluminum alloys is in the range of at least 0.25 wt. % to not higher than 0.75 wt. %.

This result substantiates the superiority of the Si content of aluminum alloys which should be in the range of at least 0.25 wt. % to not higher than 0.75 wt. %.

**Table 17**

| | Al (wt%) | Si (wt%) | INCIDENCE OF LEAK |
|---|---|---|---|
| COMP. CELL 3 | 99.50 | 0.50 | 10 / 10 |
| COMP. CELL 4 | 99.10 | 0.90 | 9 / 10 |
| INVENTION CELL 1 | 99.00 | 1.00 | 1 / 10 |
| INVENTION CELL 2 | 98.50 | 1.50 | 0 / 10 |

**Table 18**

| | Al (wt%) | Mg (wt.%) | INCIDENCE OF LEAK |
|---|---|---|---|
| COMP. CELL 5 | 99.50 | 0.50 | 10 / 10 |
| COMP. CELL 6 | 99.10 | 0.90 | 8 / 10 |
| INVENTION CELL 3 | 99.00 | 1.00 | 0 / 10 |
| INVENTION CELL 4 | 98.50 | 1.50 | 0 / 10 |

**Table 19**

| | Al (wt%) | Fe (wt%) | INCIDENCE OF LEAK |
|---|---|---|---|
| COMP. CELL 7 | 99.50 | 0.50 | 10 / 10 |
| COMP. CELL 8 | 99.10 | 0.90 | 9 / 10 |
| INVENTION CELL 5 | 99.00 | 1.00 | 2 / 10 |
| INVENTION CELL 6 | 98.50 | 1.50 | 0 / 10 |

**Table 20**

| | Al (wt%) | Cu (wt%) | INCIDENCE OF LEAK |
|---|---|---|---|
| COMP. CELL 9 | 99.50 | 0.50 | 10 / 10 |
| COMP. CELL 10 | 99.10 | 0.90 | 9 / 10 |
| INVENTION CELL 7 | 99.00 | 1.00 | 1 / 10 |
| INVENTION CELL 8 | 98.50 | 1.50 | 0 / 10 |

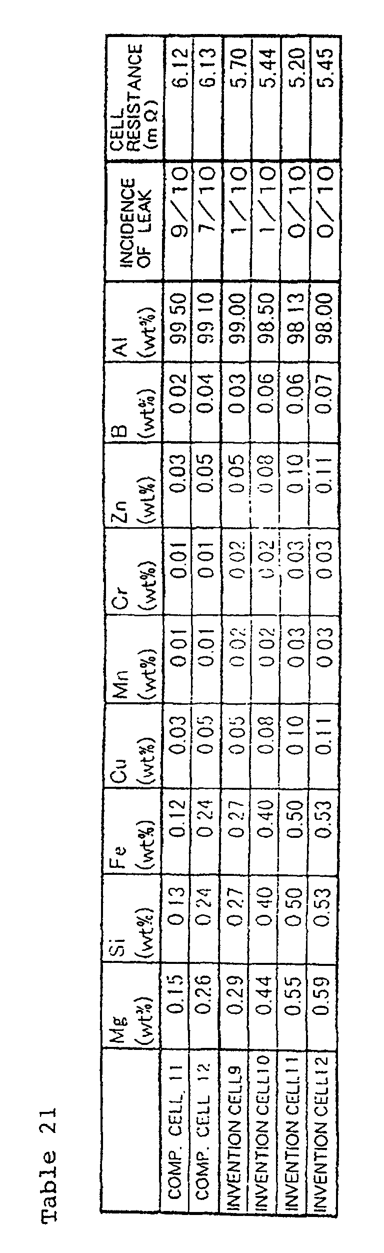

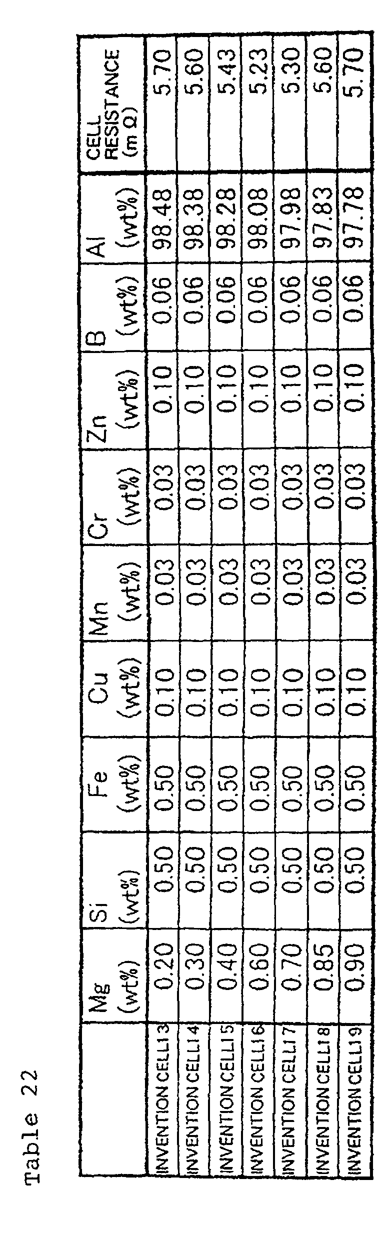

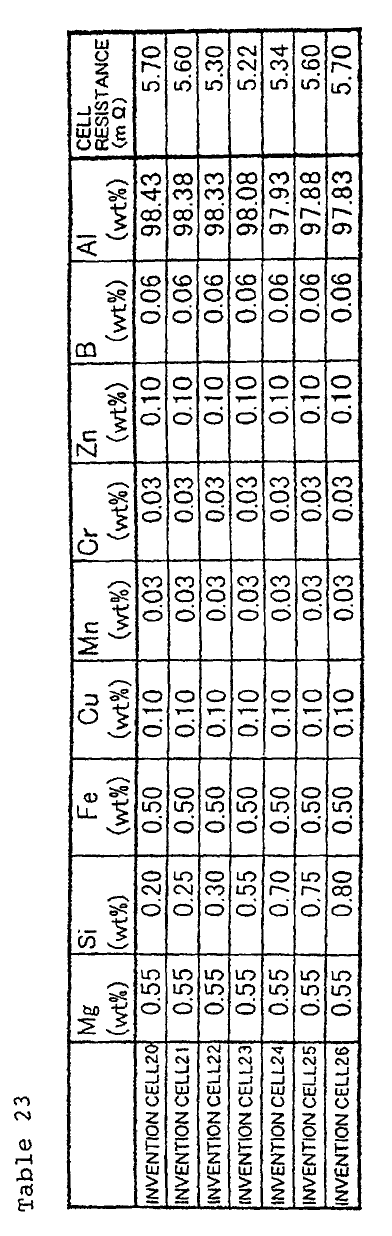

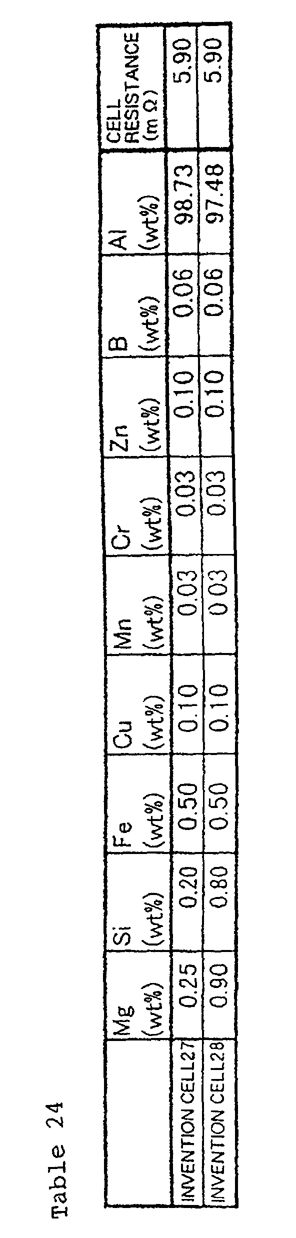

While the embodiments described above are cylindrical lithium secondary cells to which the present invention is applied, the cells of the invention are not limited specifically in shape, but the present invention is applicable to lithium secondary cells of various shapes such as those of square or rectangular cross section.

As described above in detail, the use of the positive electrode terminal and/or the negative electrode terminal of the invention in lithium secondary cells ensures more reliable electrical connection between the cell and an external circuit and gives an improved sealing effect to the portions where the terminals are attached because of the enhanced mechanical strength of the terminals. Further because the formation of oxide film is inhibited over the surfaces of the positive and negative electrode terminals, these terminals are capable of retaining high conductivity to suppress the discharge voltage drop of the cell. Thus the invention is of immense industrial value.

## Claims

1. A lithium secondary cell comprising a battery can (3), an electrode unit (4) serving as an electricity generating element and housed in the battery can (3), and a positive electrode terminal (51) and a negative electrode terminal (81) which are attached as electrically insulated from each other to the battery can (3), the electrode unit (4) having a positive electrode and a negative electrode electrically connected to the positive electrode terminal (51) and the negative electrode terminal (81) respectively, the lithium secondary cell being **characterized in that** each of the electrode terminals (51) (81) extends through a hole in a lid (2) of the battery can (3) and is attached to the lid (2), an insulating member (53) is fitted around the hole of the lid (2) through which the positive electrode terminal (51) extends, the positive electrode terminal (51) has a nut (55) fitted therearound from outside the battery can (3), and the nut (55) is tightened up thereby to serve as a seal between the lid (2) and the positive electrode terminal (51), the positive electrode terminal (51), the positive electrode terminal (51) is formed from an aluminum alloy containing at least 1.0 wt. % of a plurality of different metals as additive elements, wherein the plurality of different metals contain magnesium and silicon as additive elements, and the magnesium content is at least 0.30 wt. % to not greater than 0.85 wt. %.

2. A lithium secondary cell according to claim1, wherein the aluminum alloy further contains Fe, Cu, Mn, Zn, Cr and B as additive elements.

3. A lithium secondary cell according to claim 1, wherein the silicon content is at least 0.25 wt.% to not greater than 0.75 wt.%.

4. A lithium secondary cell according to claim 2, wherein the aluminum alloy has a composition comprising 0.35 to 0.8 wt. % of Mg, 0.30 to 0.7 wt. % of Si, 0.50 wt. % of Fe, 0.10 wt.% of Cu, 0.03 wt.% of Mn, 0.10 wt. % of Zn, 0.03 wt. % of Cr, 0.06 wt. % of B and the balance Al.

5. A lithium secondary cell according to claim 1, wherein the negative electrode terminal (81) is formed by plating a substrate of copper with nickel.

6. A lithium secondary cell according to claim 5, wherein the substrate of the negative electrode terminal (81) is made of oxygen-free copper.

7. A positive electrode terminal for use in lithium secondary cells which is formed from an aluminum alloy containing at least 1.0 wt. % of a plurality of different metals as additive elements, and which extends through a hole in a lid (2) of the battery can (3) and is attached to the lid (2), an insulating member (53) is fitted around the hole of the lid (2) through which the positive electrode terminal (51) extends, the positive electrode terminal (51) has a nut (55) fitted therearound from outside the battery can (3), and the nut (55) is tightened up thereby to serve as a seal between the lid (2) and the positive electrode terminal (51), wherein the plurality of different metals contain magnesium and silicon as additive elements, and the magnesium content is at least 0.30 wt. % to not greater than 0.85 wt. %.

8. A positive electrode terminal for use in lithium secondary cells according to claim 7, wherein the aluminum alloy further contains Fe, Cu, Mn, Zn, Cr and B as additive elements.

9. A positive electrode terminal for use in lithium secondary cells according to claim 7, wherein the silicon content is at least 0.25 wt. % to not greater than 0.75 wt. %.

10. A positive electrode terminal for use in lithium secondary cells according to claim 8, wherein the aluminum alloy has a composition comprising 0.35 to 0.8 wt. % of Mg, 0.30 to 0.7 wt. % of Si, 0.50 wt. % of Fe, 0.10 wt. % of Cu, 0.03 wt.% of Mn, 0.10 wt. % of Zn, 0.03 wt. % of Cr, 0.06 wt. % of B and the balance Al.

11. A lithium secondary cell comprising a battery can (3), an electrode unit (4) serving as an electricity generating element and housed in the battery can (3), and an electrode terminal (511) attached to the battery can (3) with an insulating member (53) provided therebetween, the electrode unit (4) having a positive electrode electrically connected to the electrode terminal (511), the electrode unit (4) having a negative electrode electrically connected to the battery can (3), the lithium secondary cell being **characterized in that** the electrode terminal (511) extends through a hole in a lid (2) of the battery can (3) and is attached to the lid (2), an insulating member (53) is fitted around the hole of the lid (2) through which the electrode terminal (511) extends, the electrode terminal (511) has a nut (55) fitted therearound from outside the battery can (3), and the nut (55) is tightened up thereby to serve as a seal between the lid (2) and the electrode terminal (511), the electrode terminal (511) is formed from an aluminum alloy containing at least 1.0 wt. % of a plurality of different metals as additive elements, wherein the plurality of different metals contain magnesium and silicon as additive elements, and the magnesium content is at least 0.30 wt. % to not greater than 0.85 wt. %.

12. A lithium secondary cell according to claim 11, wherein the aluminum alloy further contains Fe, Cu, Mn, Zn, Cr and B as additive elements.

13. A lithium secondary cell according to claim 11, wherein the aluminum alloy contains at least of 0.25 wt. % to not greater than 0.75 wt. % of Si.

14. A lithium secondary cell according to claim 12, wherein the aluminum alloy has a composition comprising 0.35 to 0.8 wt. % of Mg, 0.30 to 0.7 wt. % of Si, 0.50 wt. % of Fe, 0.10 wt. % of Cu, 0.03 wt. % of Mn, 0.10 wt. % of Zn, 0.03 wt. % of Cr, 0.06wt. % of B and the balance Al.

15. A lithium secondary cell according to claim 1, 7 or 11 wherein a tightening torque of the nut (55) is not smaller than 60 kgf · cm.

## Patentansprüche

1. Lithiumsekundärzelle mit einem Batteriegehäuse (3), einer Elektrodeneinheit (4), die als elektrizitätserzeugendes Element dient und in dem Batteriegehäuse (3) untergebracht ist, und einem positiven Elektrodenanschluß (51) und einem negativen Elektrodenanschluß (81), die elektrisch voneinander isoliert im Batteriegehäuse (3) untergebracht sind, wobei die Elektrodeneinheit (4) eine positive Elektrode und eine negative Elektrode aufweist, die mit dem positiven Elektrodenanschluß (51) bzw. dem negativen Elektrodenanschluß (81) verbunden sind, wobei die Lithiumsekundärzelle **dadurch gekennzeichnet ist, daß** jeder der Elektrodenanschlüsse (51, 81) sich durch eine Öffnung in einem Deckel (2) des Batteriegehäuses (3) erstreckt und an dem Deckel (2) befestigt ist, daß ein Isolationsteil (53) um die Öffnung im Deckel (2) befestigt ist, durch welchen sich der positive Elektrodenanschluß (51) erstreckt, daß der positive Elektrodenanschluß (51) eine Mutter (55) aufweist, die um ihn herum von der Außenseite des Batteriegehäuses (3) angepaßt ist, und daß die Mutter (55) festgezogen ist, um dadurch als Dichtung zwischen dem Deckel (2) und dem positiven Elektrodenanschluß (51) zu dienen, daß der positive Elektrodenanschluß (51) aus einer Aluminiumlegierung besteht, die mindestens 1,0 Gewichts.-% einer Vielzahl von unterschiedlichen Metallen als Zusatzelementen enthält, wobei die Vielzahl der unterschiedlichen Metalle Magnesium und Silicium als Zusatzelement aufweist und der Magenesiumgehalt mindestens 0,30 Gewichts.-% und nicht größer als 0,85 Gewichts.-% beträgt.

2. Lithiumsekundärzelle nach Anspruch 1 wobei die Aluminiumlegierung ferner Fe, Cu, Mn, Zn, Cr und B als Zusatzelement enthält.

3. Lithiumsekundärzelle nach Anspruch 1 wobei der Siliciumgehalt mindestens 0,25 Gewichts.-% und nicht mehr als 0,75 Gewichts.-% beträgt.

4. Lithiumsekundärzelle nach Anspruch 2, wobei die Aluminiumlegierung eine Zusammensetzung aufweist, die 0,35 bis 0,8 Gewichts.-% von Mn, 0,30 bis 0,7 Gewichts.-% von Si, 0,50 Gewichts.-% von Fe, 0,1 Gewichts.-% von Cu, 0,03 Gewichts.-% von Mn, 0,10 Gewichts.-% von Zn, 0,03 Gewichts.-% von Cr, 0,06 Gewichts.-% von B und eine Balance von Al enthält.

5. Lithiumsekundärzelle nach Anspruch 1, wobei der negative Elektrodenanschluß (81) ausgebildet ist durch Plattieren eines Substrates aus Kupfer mit Nickel.

6. Lithiumsekundärzelle nach Anspruch 5, wobei das Substrat des negativen Elektrodenanschlusses (81) aus sauerstofffreiem Kupfer gemacht ist.

7. Positive Elektrodenanschluß für die Benutzung in einer Lithiumsekundärzelle, die aus einer Aluminiumlegierung besteht, die mindestens 1,0 Gewichts.-% einer Vielzahl von unterschiedlichen Metallen als Zusatzelement enthält, und welche sich durch eine Öffnung in einem Deckel (2) des Batteriegehäuses (3) erstreckt und an dem Deckel (2) befestigt ist, wobei ein Isolierteil (53) um die Öffnung in dem Deckel (2) angepaßt ist, durch welchen sich der positive Elektrodenanschluß (51) erstreckt, wobei der positive Elektrodenanschluß (51) eine Mutter (55) aufweist, die darum herum von außerhalb des Batteriegehäuses (3) eingepaßt ist, und die Mutter (55) festgezogen ist, um dadurch als Dichtung zwischen dem Deckel (2) und dem positiven Elektrodenanschluß (51) zu dienen, wobei die Vielzahl von unterschiedlichen Metallen Magnesium und Silicium als Zusatzelemente aufweist, und der Magnesiumgehalt mindestens 0,30 Gewichts.-% bis nicht mehr als 0,85 Gewichts.-% beträgt.

8. Positiver Elektrodenanschluß für die Benutzung in einer Lithiumsekundärzelle gemäß Anspruch 7, wobei die Aluminiumlegierung ferner Fe, Cu, Mn, Zn, Cr and B als Zusatzelemente enthält.

9. Positiver Elektrodenanschluß für die Benutzung in einer Lithiumsekundärzelle gemäß Anspruch 7, wobei der Siliciumgehalt mindestens 0,25 Gewichts.-% bis nicht mehr als 0,75 Gewichts.-% beträgt.

10. Positiver Elektrodenanschluß für die Benutzung in einer Lithiumsekundärzelle nach Anspruch 8, wobei die Aluminiumlegierung eine Zusammensetzung aufweist, die enthält 0,35 bis 0,8 Gewichts.-% von Mn, 0,30 bis 0,7 Gewichts.-% von Si, 0,50 Gewichts.-% von Fe, 0,10 Gewichts.-% von Cu, 0,03 Gewichts.-% von Mn, 0,10 Gewichts.-% von Zn, 0,03 Gewichts.-% von Cr, 0,06 Gewichts.-% von B und einen Ausgleich Al.

11. Lithiumsekundärzelle mit einem Batteriegehäuse, eine Elektrodeneinheit (4) die als elektrizitätserzeugendes Element dient und in dem Batteriegehäuse (3) untergebracht ist, und einem Elektrodenanschluß (511), der am Batteriegehäuse (3) befestigt ist, wobei ein isolierendes Element (53) dazwischen vorgesehen ist, wobei die Elektrodeneinheit (4) eine positive Elektrode aufweist, die elektrisch mit dem Elektrodenanschluß (511) verbunden ist, wobei die Elektrodeneinheit (4) eine negative Elektrode aufweist, die elektrisch mit dem Batteriegehäuse (3) verbunden ist, wobei die Lithiumsekundärzelle **gekennzeichnet ist, dadurch**, daß der Elektrodenanschluß (511) sich **durch** eine Öffnung in einem Deckel (2) des Batteriegehäuses (3) erstreckt und an dem Deckel (2) befestigt ist, daß ein Isolierteil (53) um die Öffnung im Deckel (2) angepaßt ist, **durch** welchen sich der Elektrodenanschluß (511) erstreckt, daß der Elektrodenanschluß (511) eine Mutter (55) aufweist, die darum herum von der Außenseite des Batteriegehäuses angepaßt ist, und daß die Mutter (55) festgezogen ist, um **dadurch** als Dichtung zwischen dem Deckel (2) und dem Elektrodenanschluß (511) zu dienen, und daß der Elektrodenanschluß (511) als eine Aluminiumlegierung geformt ist, die mindestens 1,0 Gewichts.-% einer Vielzahl von unterschiedlichen Metallen als Zusatzelement aufweist, wobei die Vielzahl der unterschiedlichen Metalle Magnesium und Silicium als Zusatzelement enthalten und der Magnesiumgehalt mindestens 0,30 Gewichts.-% und nicht mehr als 0,85 Gewichts.-% beträgt.

12. Lithiumsekundärzelle nach Anspruch 11, wobei die Aluminiumlegierung ferner enthält Fe, Cu, Mn, Zn, Cr und B als Zusatzelemente.

13. Lithiumsekundärzelle nach Anspruch 11, wobei die Aluminiumlegierung mindestens 0,25 Gewichts.-% bis nicht mehr als 0,75 Gewichts.-% von Si enthält.

14. Lithiumsekundärzelle nach Anspruch 12, wobei die Aluminiumlegierung eine Zusammensetzung hat, die aufweist, 0,35 bis 0,8 Gewichts.-% von Mg, 0,30 bis 0,7 Gewichts.-% von Si, 0,50 Gewichts.-% von Fe, 0,10 Gewichts.-% von Cu, 0,03 Gewichts.-% von Mn, 0,10 Gewichts.-% von Zn, 0,03 Gewichts.-% von Cr, 0,06 Gewichts.-% von B und einen Ausgleich von Al.

15. Lithiumsekundärzelle nach Anspruch 1, 7 oder 11, wobei das Festziehdrehmoment der Mutter (55) nicht weniger als 60 kgf · cm beträgt.

## Revendications

1. Pile secondaire au lithium, comportant un boîtier (3), une unité d'électrodes (4), servant d'élément générateur d'électricité et logée dans le boîtier (3), et une borne d'électrode positive (51) et une borne d'électrode négative (81) qui sont fixées au boîtier (3) tout en étant électriquement isolées l'une de l'autre, l'unité d'électrodes (4) comportant une électrode positive et une électrode négative électriquement connectées, respectivement, à la borne d'électrode positive (51) et à la borne d'électrode négative (81), laquelle pile secondaire au lithium est **caractérisée en ce que** chacune des bornes d'électrode (51, 81) passe à travers un trou ménagé dans un couvercle (2) du boîtier (3) et se trouve fixée au couvercle (2), un élément isolant (53) garnit le trou du couvercle (2) à travers lequel passe la borne d'électrode positive (51), laquelle borne (51) porte un écrou (55), vissé sur la borne à l'extérieur du boîtier (3), lequel écrou (55) est serré pour assurer l'étanchéité entre le couvercle (2) et la borne d'électrode positive (51), laquelle borne d'électrode positive (51) est en un alliage d'aluminium contenant au moins 1,0 % en poids de divers métaux, en tant qu'éléments ajoutés, parmi lesquels il y a du silicium et du magnésium, ce dernier se trouvant en une proportion pondérale d'au moins 0,30 % et d'au plus 0,85 %.

2. Pile secondaire au lithium, conforme à la revendication 1, dans laquelle l'alliage d'aluminium contient en outre, comme éléments ajoutés, du fer, du cuivre, du manganèse, du zinc, du chrome et du bore.

3. Pile secondaire au lithium, conforme à la revendication 1, dans laquelle la proportion pondérale de silicium dans l'alliage vaut au moins 0,25 % et au plus 0,75 %.

4. Pile secondaire au lithium, conforme à la revendication 2, dans laquelle l'alliage d'aluminium présente la composition suivante : 0,35 à 0,8 % en poids de Mg, 0,30 à 0,7 % en poids de Si, 0,50 % en poids de Fe, 0,10 % en poids de Cu, 0,03 % en poids de Mn, 0,10 % en. poids de Zn, 0,03 % en poids de Cr, et 0,06 % en poids de B, le complément étant de l'aluminium.

5. Pile secondaire au lithium, conforme à la revendication 1, dans laquelle la borne d'électrode négative (81) est constituée d'un substrat de cuivre portant un placage de nickel.

6. Pile secondaire au lithium, conforme à la revendication 5, dans laquelle le substrat de la borne d'électrode négative (81) est en cuivre exempt d'oxygène.

7. Borne d'électrode positive à employer dans des piles secondaires au lithium, qui est constituée d'un alliage d'aluminium contenant au moins 1,0 % en poids de divers métaux, en tant qu'éléments ajoutés, et qui passe à travers un trou ménagé dans un couvercle (2) du boîtier (3) et se trouve fixée au couvercle (2), un élément isolant (53) garnissant le trou du couvercle (2) à travers lequel passe la borne d'électrode positive (51), laquelle borne (51) porte un écrou (55), vissé sur la borne à l'extérieur du boîtier (3), lequel écrou (55) est serré pour assurer l'étanchéité entre le couvercle (2) et la borne d'électrode positive (51), et dans laquelle borne d'électrode positive (51) il y a, parmi lesdits divers métaux présents en tant qu'éléments ajoutés, du silicium et du magnésium, ce dernier se trouvant en une proportion pondérale d'au moins 0,30 % et d'au plus 0,85 %.

8. Borne d'électrode positive à employer dans des piles secondaires au lithium, conforme la revendication 7, dans laquelle l'alliage d'aluminium contient en outre, comme éléments ajoutés, du fer, du cuivre, du manganèse, du zinc, du chrome et du bore.

9. Borne d'électrode positive à employer dans des piles secondaires au lithium, conforme à la revendication 7, dans laquelle la proportion pondérale de silicium dans l'alliage vaut au moins 0,25 % et au plus 0,75 %.

10. Borne d'électrode positive à employer dans des piles secondaires au lithium, conforme à la revendication 8, dans laquelle l'alliage d'aluminium présente la composition suivante : 0,35 à 0,8 % en poids de Mg, 0,30 à 0,7 % en poids de Si, 0,50 % en poids de Fe, 0,10 % en poids de Cu, 0,03 % en poids de Mn, 0,10 % en poids de Zn, 0,03 % en poids de Cr, et 0,06 % en poids de B, le complément étant de l'aluminium.

11. Pile secondaire au lithium, comportant un boîtier (3), une unité d'électrodes (4), servant d'élément générateur d'électricité et logée dans le boîtier (3), et une borne d'électrode (511) fixée au boîtier (3) avec un élément isolant (53) disposé entre eux, l'unité d'électrodes (4) comportant une électrode positive électriquement connectée à la borne d'électrode (511) et une électrode négative électriquement connectée au boîtier (3), laquelle pile secondaire au lithium est **caractérisée en ce que** la borne d'électrode (511) passe à travers un trou ménagé dans un couvercle (2) du boîtier (3) et se trouve fixée au couvercle (2), l'élément isolant (53) garnit le trou du couvercle (2) à travers lequel passe la borne d'électrode (511), laquelle borne (511) porte un écrou (55), vissé sur la borne à l'extérieur du boîtier (3), lequel écrou (55) est serré pour assurer l'étanchéité entre le couvercle (2) et la borne d'électrode (511), laquelle borne d'électrode (511) est en un alliage d'aluminium contenant au moins 1,0 % en poids de divers métaux, en tant qu'éléments ajoutés, parmi lesquels il y a du silicium et du magnésium, ce dernier se trouvant en une proportion pondérale d'au moins 0,30 % et d'au plus 0,85 %.

12. Pile secondaire au lithium, conforme à la revendication 11, dans laquelle l'alliage d'aluminium contient en outre, comme éléments ajoutés, du fer, du cuivre, du manganèse, du zinc, du chrome et du bore.

13. Pile secondaire au lithium, conforme à la revendication 11, dans laquelle la proportion pondérale de silicium dans l'alliage vaut au moins 0,25 % et au plus 0,75 %.

14. Pile secondaire au lithium, conforme à la revendication 12, dans laquelle l'alliage d'aluminium présente la composition suivante : 0,35 à 0,8 % en poids de Mg, 0,30 à 0,7 % en poids de Si, 0,50 % en poids de Fe, 0,10 % en poids de Cu, 0,03 % en poids de Mn, 0,10 % en poids de Zn, 0,03 % en poids de Cr, et 0,06 % en poids de B, le complément étant de l'aluminium.

15. Pile secondaire au lithium, conforme à la revendication 1, 7 ou 11, dans laquelle le couple de serrage de l'écrou (55) vaut au moins 60 kgf.cm.
